# EUROPEAN PATENT SPECIFICATION

(11) **EP 2 399 264 B1**
(45) Date of publication and mention of the grant of the patent: **27.03.2013**
(21) Application number: 09795570.2
(22) Date of filing: 14.12.2009
(51) Int. Cl.: H01B 12/14

(54) **CRYOSTAT FOR A HIGH-TEMPERATURE SUPERCONDUCTING POWER CABLE**
KRYOSTAT FÜR EIN BEI HOCHTEMPERATUR SUPERLEITENDES STROMKABEL
CRYOSTAT POUR UN CÂBLE D'ALIMENTATION SUPRACONDUCTEUR HAUTE TEMPÉRATURE

(30) Priority: 23.02.2009 NL 2002555
(43) Date of publication of application: 28.12.2011
(73) Proprietor: Technische Universiteit Delft, 2628 CN Delft (NL)
(72) Inventor: CHEVTCHENKO, Oleg Alexander, NL-2901 Capelle Aan De Ijssel (NL); SMIT, Johan Jurriaan, NL2631 VX Nootdorp (NL); GESCHIERE, Abraham, NL-2134 VP Hoofdddorp (NL)
(74) Representative: Van Breda, Jacobus
(86) International application number: PCT/NL2009/000251
(87) International publication number: WO 2010/095925

(56) References cited:
- EP-A- 1 363 062
- JP-A- 2006 228 740
- KR-B1- 100 706 495
- US-B1- 6 280 814
- SCURLOCK ET AL: "Cryogenics at the university of southampton: a review" CRYOGENICS, ELSEVIER, KIDLINGTON, GB, vol. 28, no. 7, 1 July 1988 (1988-07-01), pages 439-466, XP024049754 ISSN: 0011-2275 [retrieved on 1988-07-01]

## Description

The invention relates to a cryostat for a high-temperature superconducting power cable, comprising concentric tubes, an annular region between said tubes, wherein a multilayer thermal insulation and getter material for supporting high vacuum conditions are provided in said annular region, and wherein the multilayer insulation comprises reflective layers separated by fibrous spacer material.

Such a cryostat is known from the prior art and uses multilayer superinsulation that typically consists of many layers of a reflecting material (for instance A1) and of a spacing material between these layers (such as paper made of fine glass fibers) pumped to a high vacuum (such as below 10⁻⁴ torr). In order to reach such high vacuum, good quality surfaces and getters such as activated carbon powder are typically used. Other known getter material is for instance alumina, or Co₃O₄ + PdO.

EP 1 363 062 A1 and KR 100 706 495 B1 recite examples of cryostats.

EP 1 363 062 A1 discloses a conduit for the transport of cryogenic media, in particular a superconducting cable, including at least two metal pipes arranged concentrically and spaced apart from one another, an insulation layer being situated in the annular gap between the metal pipes and the annular gap being evacuated; the exterior of the metal pipe is separated at predetermined intervals and above each opening a pump connector is welded vacuum-tight to the outer metal pipe.

KR 100 706 495 B1 discloses a superconductive cable including a multilayer film with activated carbon fiber. The superconductive cable includes an outer sheath, an inner sheath, a multilayer film and a spacer.

A known problem of existing cryostats is however, that due to residual gases inside the superinsulation the local pressure can be substantially higher than the desired value (such as 10 to 50 times higher). When applied in a cryostat of a high-temperature superconducting cable (HTS cable), the multilayer superinsulation (MLI) can then exhibit a heat leak (for instance from room temperature to 77 K) of about 1 W/m. As a result, when liquid (or sub-cooled) nitrogen is used for cooling of a 5 km long HTS cable, the pressure drop along the cable can be as high as for instance 20 bar.

An object of the invention is to improve the superinsulation properties of the cryostat for the HTS cable, allowing that the pressure drop along the cable can be diminished to acceptable values.

A further object of the invention is to improve the situation with existing cryostats and more specifically the thermal insulation of a high-temperature superconducting cable, that in the prior art only allows a distance between two cooling stations in the order of hundreds of meters, while for many applications this distance must be several kilometers. This situation is not acceptable and delays commercial application of HTS cables.

According to the invention a cryostat is proposed having the features of one or more of the appended claims.

In a first aspect of the invention the fibrous spacer material comprises activated carbon micro-fibers and/or activated carbon nano-fibers. Due to their small diameter and less point contacts than exist in carbon powder as applied in the prior art, the activated carbon micro-fibers and activated carbon nano-fibers comprised in the spacing material provide a lower thermal conductivity than do carbon powder spheres of the same diameter. It is essential that the carbon fibers are activated carbon fibers, although it is according to the invention not important at what time the carbon fibers have been activated. Activation of the carbon fibers may for instance occur by means of a so-called bake out at 180°C in vacuum. The activated carbon micro-fibers that are employed in the invention may further have preference over the activated carbon nano-fibers if costs are a prime consideration.

This first aspect of the invention is based on the insight that by replacing activated carbon powder and (some of) the fibers of the spacing material (made of glass for instance) with activated carbon micro-fibers and/or activated carbon nano-fibers, the heat flux through the multilayer insulation can be largely reduced due to the fact that the activated carbon fibers cause lowering of the pressure of residual gases inside the multilayer without increasing the thermal conductivity of solids within this spacing material.

It is a preferable option that the fibrous spacer material comprises carbonaceous or non-carbonaceous getter material. This promotes the reduction of residual gases in the insulation.

The inventors have found it to be particularly effective feature that the fibers of the spacer material have their axes oriented essentially concentrically within the annular region. This can be achieved by applying e.g. a conventional paper-making technique for manufacturing the spacer material.

Further advantageously the fibers are essentially uniformly distributed in the fibrous spacer material.

Another aspect of the invention is that the getter material is at least in part embodied in the activated carbon fibers of the fibrous spacer material. As a result the pressure of residual gases inside the multilayer insulation is lowered without increasing the solid state thermal conductivity that would take place if conventional activated carbon powder spheres were added into the spacing material.

Another aspect of the invention is that the carbon fibers are provided in a mixture with conventional spacer material of glass fibers. When such activated carbon fibers are added to a multilayer insulation spacing material made of fine glass fibers, this leads to reduction of the residual gas pressure due to the working of the carbon fibers as getter material inside the spacing material of the multilayer insulation.

A cryostat with a multilayer insulation according to the prior art exhibits a heat flux of approximately 1 W/m². When a few percent of carbon powder is added to the spacing material of such a conventional multilayer insulation, a lower heat flux can be reached (such as 0.1 W/m²) due to reduction of the residual gas pressure in the multilayer insulation. However, adding larger amounts (such as more than 5%) of carbon powder to the spacing material of a conventional cryostat does not lead to a further lowering of the heat flux.

The cryostat with a multilayer insulation according to the invention can exhibit a substantially lower heat flux (such as for instance at a level of 0.02 W/m²), already when the fraction of fine glass fibers replaced with fine activated carbon fibers is at a level of a few percent to 5-10%. There is however no technical limitation to the percentage of activated carbon fibers that is applied in the cryostat of the invention; the carbon fibers may even replace all glass fibers. It is therefore preferred that the mixture of carbon fibers with conventional spacer material of glass fibers comprises an amount of carbon fibers in the range of 0.1-100 weight percent.

Still another aspect of the invention is that the concentric tubes of the (flexible) cryostat have corrugations and that at least part of the getter material is provided in these corrugations. The getter material is for instance made in the form of fabrics, e.g. activated carbon-fiber fabrics, such as a hose or a braid, which is positioned in the corrugations and kept in place by means of a spring, e.g. a stainless steel spring wire.

The general construction of a cryostat is completely known to the person skilled in the art. In view of the fact that the contribution of the invention to the cryostat of the prior art basically resides in replacing activated carbon powder and (some of) the fibers of the known spacing material (made of glass for instance) of the multilayer insulation with activated carbon micro-fibers and/or activated nano-fibers, it is considered that the above given description is sufficiently clear and complete for a person skilled in the art to carry out the invention. It is not considered beneficial adding this elucidation with drawings and providing a description of these drawings, while the difference between the application of conventional powder carbon as is done in the prior art, and the application of activated carbon micro-fibers and activated carbon nano-fibers according to the invention cannot be shown in a clarifying manner in such figures.

Finally the inventors remark that it may be beneficial to apply within the annular region at the side facing the outer concentric tube pressure means that preferably uniformly pressurize the multilayer insulation. This is beneficial in case the fibrous spacer material between two reflective layers is comprised of one layer of glass fiber paper, or of three layers, in which an inner layer is made of fine getter (e.g. carbon) fibers in the form of any fabrics, or paper, and an outer layer is embodied as conventional fibrous spacer material, e.g. glass fiber paper. Without specific measures the total thickness of such a multilayer insulation (due to the additional getter fine fiber layers) may become higher then in a conventional embodiment and this higher thickness may be reduced by applying additional pressure on the outer layer of the insulation. This can for instance be done by applying extra tight winding of the layers of the multilayer insulation. In this manner the total thickness of the multilayer insulation can remain at an acceptable value.

## Claims

1. Cryostat for a high-temperature superconducting power cable, comprising concentric tubes, an annular region between said tubes, wherein a multilayer thermal insulation and getter material for supporting high vacuum conditions are provided in said annular region, and wherein the multilayer insulation comprises reflective layers separated by fibrous spacer material, **characterized in that** the fibrous spacer material comprises activated carbon micro-fibers and/or activated carbon nano-fibers.

2. Cryostat in accordance with claim 1, **characterized in that** the fibrous spacer material comprises carbonaceous or non-carbonaceous getter material.

3. Cryostat in accordance with claim 1 or 2, **characterized in that** the fibers of the spacer material have their axes oriented essentially concentrically within the annular region.

4. Cryostat in accordance with anyone of claims 1-3, **characterized in that** the fibers are essentially uniformly distributed in the fibrous spacer material.

5. Cryostat in accordance with anyone of claims 1-4, **characterized in that** the getter material is at least in part embodied in the activated carbon fibers of the fibrous spacer material.

6. Cryostat in accordance with anyone of the previous claims, **characterized in that** the carbon fibers are provided in a mixture with conventional spacer material of glass fibers.

7. Cryostat in accordance with claim 6, **characterized in that** the mixture of carbon fibers with conventional spacer material of glass fibers comprises an amount of carbon fibers in the range of 0.1-100 weight percent.

8. Cryostat in accordance with any one of the previous claims, **characterized in that** within the annular region at the side facing the outer concentric tube there are pressure means pressurizing, preferably uniformly pressurizing, the multilayer insulation.

9. Cryostat in accordance with anyone of the previous claims, **characterised in that** the concentric tubes have corrugations whereby at least part of the getter material is provided in the corrugations.

## Patentansprüche

1. Kryostat für ein supraleitendes Hochtemperatur-Stromkabel, der konzentrische Röhren umfasst, wobei sich eine ringförmige Region zwischen den Röhren befindet, wobei eine mehrschichtige Wärmeisolierung und ein Gettermaterial zum Unterstützen von Hochvakuumbedingungen in der ringförmigen Region angeordnet sind, und wobei die mehrschichtige Isolierung Reflexionsschichten umfasst, die durch ein faserförmiges Abstandshaltermaterial voneinander getrennt sind, **dadurch gekennzeichnet, dass** das faserförmige Abstandshaltermaterial Aktivkohle-Mikrofasern und/oder Aktivkohle-Nanofasern umfasst.

2. Kryostat nach Anspruch 1, **dadurch gekennzeichnet, dass** das faserförmige Abstandshaltermaterial kohlenstoffhaltiges oder nicht-kohlenstoffhaltiges Gettermaterial umfasst.

3. Kryostat nach Anspruch 1 oder 2, **dadurch gekennzeichnet, dass** die Achsen der Fasern des Abstandshaltermaterials im Wesentlichen konzentrisch innerhalb der ringförmigen Region orientiert sind.

4. Kryostat nach einem der Ansprüche 1-3, **dadurch gekennzeichnet, dass** die Fasern im Wesentlichen gleichmäßig in dem faserförmigen Abstandshaltermaterial verteilt sind.

5. Kryostat nach einem der Ansprüche 1-4, **dadurch gekennzeichnet, dass** das Gettermaterial mindestens teilweise in den Aktivkohlefasern des faserförmigen Abstandshaltermaterials verkörpert ist.

6. Kryostat nach einem der vorangehenden Ansprüche, **dadurch gekennzeichnet, dass** die Kohlefasern in einem Gemisch mit herkömmlichem Abstandshaltermaterial aus Glasfasern angeordnet sind.

7. Kryostat nach Anspruch 6, **dadurch gekennzeichnet, dass** das Gemisch aus Kohlefasern mit herkömmlichem Abstandshaltermaterial aus Glasfasern einen Betrag an Kohlefasern im Bereich von 0,1-100 Gewichtsprozent umfasst.

8. Kryostat nach einem der vorangehenden Ansprüche, **dadurch gekennzeichnet, dass** innerhalb der ringförmigen Region auf der Seite, die der äußeren konzentrischen Röhre zugewandt ist, Druckmittel angeordnet sind, welche die mehrschichtige Isolierung mit Druck beaufschlagen und vorzugsweise gleichmäßig mit Druck beaufschlagen.

9. Kryostat nach einem der vorangehenden Ansprüche, **dadurch gekennzeichnet, dass** die konzentrischen Röhren Wellungen aufweisen, wobei mindestens ein Teil des Gettermaterials in den Wellungen angeordnet ist.

## Revendications

1. Cryostat pour câble de puissance supraconducteur haute température comprenant des tubes concentriques, une zone annulaire entre lesdits tubes, dans laquelle se trouvent une isolation thermique multicouche et un matériau dégazeur adapté à des conditions de vide poussé, et dans laquelle l'isolation multicouche comprend des couches réfléchissantes séparées par un matériau d'espacement fibreux, **caractérisé en ce que** le matériau d'espacement fibreux comprend des microfibres en carbone actif et / ou des nanofibres en carbone actif.

2. Cryostat selon la revendication 1, **caractérisé en ce que** le matériau d'espacement fibreux comprend un matériau dégazeur carboné ou non-carboné.

3. Cryostat selon la revendication 1 ou 2, **caractérisé en ce que** les axes des fibres du matériau d'espacement sont principalement orientés de manière concentrique dans la zone annulaire.

4. Cryostat selon l'une quelconque des revendications 1 à 3, **caractérisé en ce que** les fibres sont principalement uniformément réparties dans le matériau d'espacement fibreux.

5. Cryostat selon l'une quelconque des revendications 1 à 4, **caractérisé en ce que** le matériau dégazeur est au moins en partie incorporé dans les fibres de carbone actif du matériau d'espacement fibreux.

6. Cryostat selon l'une quelconque des revendications précédentes, **caractérisé en ce que** les fibres de carbone sont mélangées avec un matériau d'espacement conventionnel en fibre de verre.

7. Cryostat selon la revendication 6, **caractérisé en ce que** le mélange de fibres de carbone avec le matériau d'espacement conventionnel en fibre de verre comprend une quantité de fibres de carbone de l'ordre de 0,1-100 en pourcentage massique.

8. Cryostat selon l'une quelconque des revendications précédentes, **caractérisé en ce que** dans la zone annulaire, du côté tourné vers le tube concentrique extérieur, se trouvent des dispositifs de pression pressurisant, préférablement de manière uniforme, l'isolation multicouche.

9. Cryostat selon l'une quelconque des revendications précédentes, **caractérisé en ce que** les tubes concentriques ont des cannelures dans lesquelles se trouve au moins une partie du matériau dégazeur.
